# EUROPEAN PATENT SPECIFICATION

(11) **EP 2 639 933 B1**
(45) Date of publication and mention of the grant of the patent: **05.08.2020**
(21) Application number: 11840112.4
(22) Date of filing: 01.11.2011
(51) Int. Cl.: H02K 1/16, H02K 1/18

(54) **DYNAMO-ELECTRIC MACHINE**
DYNAMOELEKTRISCHE MASCHINE
MACHINE DYNAMOÉLECTRIQUE

(30) Priority: 08.11.2010 JP 2010249513
(43) Date of publication of application: 18.09.2013
(73) Proprietor: Hitachi Automotive Systems, Ltd., Hitachinaka-shi Ibaraki 312-8503 (JP)
(72) Inventor: NAKAYAMA, Kenichi, Hitachinaka-shi Ibaraki 312-8503 (JP); GOTO, Tsuyoshi, Hitachinaka-shi Ibaraki 312-8503 (JP); OKAMOTO, Hiromitsu, Hitachinaka-shi Ibaraki 312-8503 (JP); ADACHI, Tomohiro, Hitachinaka-shi Ibaraki 312-8503 (JP); MIRUMACHI, Mitsuaki, Hitachinaka-shi Ibaraki 312-0034 (JP); AJIMA, Kou, Hitachinaka-shi Ibaraki 312-0034 (JP)
(74) Representative: MERH-IP Matias Erny Reichl Hoffmann Patentanwälte PartG mbB
(86) International application number: PCT/JP2011/075194
(87) International publication number: WO 2012/063684

(56) References cited:
- CA-A1- 2 860 515
- DE-A1- 2 706 717
- FR-A5- 2 093 227
- JP-A- 10 174 327
- JP-A- 2000 224 787
- JP-A- 2009 072 035
- JP-A- 2010 226 790
- US-A- 4 485 320
- US-A1- 2010 253 161

## Description

### Technical Field

The present invention relates to a rotating electrical machine, and more particularly, to a rotating electrical machine that generates torque or generates power at the time of braking for the traveling of a vehicle.

### Background Art

A rotating electrical machine includes a stator and a rotor, and the stator includes a stator core in which a plurality of slots is formed. In order to suppress the iron loss, in the stator core, a predetermined number of magnetic steel sheets of about 0.05 to 1.0 mm are generally stacked and are integrated by being welded at predetermined positions on outer peripheral portions of the magnetic steel sheets, or the like (see PTL 1).

Around the stator core manufactured as above, a coil is wound. By supplying AC power to the coil, the rotating electrical machine generates a rotating magnetic field, and the rotor is rotated in accordance with the rotating magnetic field. The rotating electrical machine converts mechanical energy participating to the rotor into electric energy, thereby outputting AC power from the coil. The rotating electrical machine operates as an electric motor or a generator.

### Citation List

### Patent Literature

PTL 1: Japanese Patent Application Laid-Open No. 2002-291184
DE 2706717 A1 relates to a method for producing a laminated stator body for supporting the stator windings in a dynamo-electric machine. The method is characterized in that it starts with a stator pack consisting of a plurality of annular lamellas or convolutions of a spirally wound band arranged in such relative position to form the stator winding passages, the package having a longitudinally oriented notch in its outer peripheral surface, wherein the notch has a rectangular cross-section, that a clamp is inserted into the notch in such a way that it firmly engages on opposite side walls of the notch, and that the package is deformed in the region of the notch so that the side walls of the notch are deformed and thereby come to rest over the clamp.

### Summary of Invention

### Technical Problem

A rotating electrical machine is known which includes: a stator; a rotor disposed to an inner side of the stator so as to be rotatable; and a housing holding the stator through shrinkage fit or press fit. In a case where the rotating electrical machine is mounted in a vehicle, there is a case where the rotating electrical machine is fixed to a right place in the vehicle using a flange arranged on one end face of the housing. In the rotating electrical machine, compressive stress is concentrated on a portion of the stator core corresponding to the flange of the housing, and there is a problem in that the magnetic steel sheet of the portion in which the stress is concentrated is deformed to be undulated (to project in an axial direction).

Particularly, in a rotating electrical machine for generating torque used for the traveling of a vehicle, interference between the housing and the stator core is set to be large, and it needs to fix the housing to a maximum level and to increase the clamping torque, whereby it is easy for the magnetic steel sheet to deform.

### Solution to Problem

(1) A rotating electrical machine according to claim 1 is provided.
(2) According to a second aspect the reinforcing portions are preferably formed as welding portions arranged to be parallel to an axial direction of the stator core.
(3) According to a third aspect, the reinforcing portions are preferably formed as clinching parts used for stacking and fixing the steel sheets.
(4) According to a fourth aspect, the welding portions are preferably arranged in an outer circumferential portion and/or an inner circumferential portion of the stator core.
(5) According to a fifth aspect, the reinforcing portions are preferably arranged on a center axis of teeth of the stator core.
(6) According to a sixth aspect, it is preferable that welding grooves be arranged in the outer circumferential portion on the center axis of all the teeth of the stator core, and the welding portions be disposed in the welding grooves arranged in correspondence with the flanges of the housing.
(7) The stator core is an integration-type core, a plurality of slots parallel to the axial direction of the stator core are formed in the stator core, and a segment-type coil in which a plurality of segment conductors are connected to each other and an insulating paper used for insulating between the segment conductors each other and the slots and the segment conductors are arranged in the slot.
(8) According to an eighth aspect, the plurality of flanges preferably protrude to an outer side in a diameter direction on a peripheral edge of one end face of the cylinder-shaped housing.

### Advantageous Effects of Invention

According to the present invention, a rotating electrical machine can be provided which is capable of suppressing the deformation of a stator core due to a clamping force participating to the stator core fixed to a housing through shrinkage fit or press fit.

### Brief Description of Drawings

[FIG. 1] FIG. 1 is a schematic diagram that illustrates the whole configuration of a rotating electrical machine according to an embodiment of the present invention.
[FIG. 2] FIG. 2 is a perspective view that illustrates a stator and a housing of a rotating electrical machine according to a first embodiment of the present invention.
[FIG. 3] FIG. 3 is a perspective view that illustrates a stator core of the rotating electrical machine according to the first embodiment of the present invention.
[FIG. 4] FIG. 4 is a perspective view that illustrates a magnetic steel sheet configuring the stator core according to the first embodiment of the present invention.
[FIG. 5] FIG. 5 is a perspective view that illustrates stator coil, which is wound around the stator core, corresponding to three phases.
[FIG. 6] FIG. 6 is a perspective view that illustrates a U-phase stator coil wound around the stator core.
[FIG. 7] FIG. 7 is a perspective view that illustrates a Ul-phase stator coil wound around the stator core.
[FIG. 8] FIG. 8 is a perspective view that illustrates a U2-phase stator coil wound around the stator core.
[FIG. 9] FIG. 9(a) is a schematic diagram that illustrates a cross section of a rotor and a stator, and FIG. 9(b) is an enlarged schematic diagram of portion A illustrated in FIG. 9(a).
[FIG. 10] FIG. 10 is a schematic plan view that illustrates a state in which the stator core is fixed to the housing through shrinkage fit or press fit in the rotating electrical machine according to the first embodiment of the present invention.
[FIG. 11] FIG. 11 is a perspective view that illustrates a stator and a housing of a rotating electrical machine according to a second embodiment of the present invention.
[FIG. 12] FIG. 12 is a schematic plan view that illustrates a state in which a stator core is fixed to the housing through shrinkage fit or press fit in the rotating electrical machine according to the second embodiment of the present invention.
[FIG. 13] FIG. 13 is a schematic plan view that illustrates a state in which a stator core is fixed to a housing through shrinkage fit or press fit in a rotating electrical machine according to a third embodiment of the present invention.
[FIG. 14] FIG. 14 is a schematic plan view that illustrates a state in which a stator core is fixed to a housing through shrinkage fit or press fit in a rotating electrical machine according to a fourth embodiment of the present invention.
[FIG. 15] FIG. 15 is a schematic plan view that illustrates a state in which a stator core is fixed to a housing through shrinkage fit or press fit in a rotating electrical machine according to a fifth embodiment of the present invention.
[FIG. 16] FIG. 16 is a schematic diagram that illustrates a cross-section of a clinching part stacking and fixing a magnetic steel sheet configuring the stator core according to the fifth embodiment of the present invention.
[FIG. 17] FIG. 17 is a perspective view that illustrates a stator core of a rotating electrical machine according to a sixth embodiment of the present invention.
[FIG. 18] FIG. 18 is a plan view that illustrates a stator core in which welding grooves are disposed on a central axis of all the teeth.

### Description of Embodiments

Hereinafter, embodiments of the present invention will be described in detail with reference to the drawings.

### [First Embodiment]

### Whole Configuration of Rotating Electrical Machine

A rotating electrical machine according to this embodiment is a rotating electrical machine that is appropriate for being used for the traveling of a vehicle. As so-called electric vehicles each using a rotating electrical machine, there are a hybrid-type electric vehicle (HEV) including both an engine and a rotating electrical machine and a pure electric vehicle (EV) traveling using only a rotating electrical machine without using an engine, and the rotating electrical machine to be described below can be used for both of the types. Therefore, representatively, the rotating electrical machine that is used for the hybrid-type electric vehicle will be described.

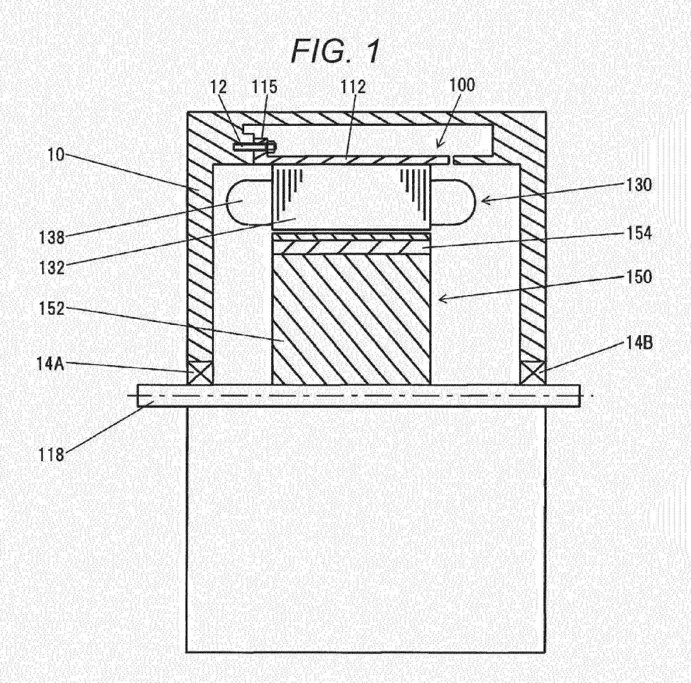

FIG. 1 is a schematic diagram that illustrates the whole configuration of a rotating electrical machine 100 according to an embodiment of the present invention. In FIG. 1, a part of the rotating electrical machine 100 is illustrated as a cross-section, whereby the inside of the rotating electrical machine 100 is illustrated.

The rotating electrical machine 100, as illustrated in FIG. 1, is disposed inside a casing 10. The rotating electrical machine 100 includes a housing 112, a stator 130 including a stator core 132 that is fixed to the housing 112, and a rotor 150 disposed inside the stator 130 so as to be rotatable. The casing 10 is configured by a casing of an engine or a casing of a transmission.

The rotating electrical machine 100 is a three-phase synchronous motor of a permanent magnet built-in type. By supplying a three-phase AC current to a stator coil 138 that is wound around the stator core 132, the rotating electrical machine 100 operates as an electric motor that rotates the rotor 150. When being driven by an engine, the rotating electrical machine 100 operates as a generator and outputs generated power of three-phase AC. In other words, the rotating electrical machine 100 has both a function as an electric motor that generates rotating torque based on electric energy and a function as a generator that generates power based on mechanical energy, and the above-described functions can be selectively used in accordance with the traveling state of a vehicle.

The stator 130 fixed to the housing 112 is held to be fixed inside the casing 10 by fastening a flange 115 disposed in the housing 112 to the casing 10 using a bolt 12.

The rotor 150 is fixed to a shaft 118 that is supported by bearings 14A and 14B of the casing 10 and is held to be rotatable on the inner side of the stator core 132.

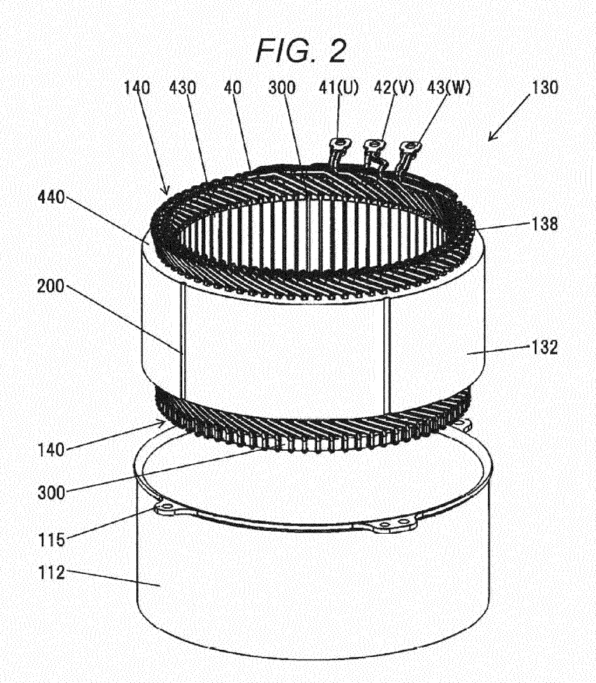

The housing 112 and the stator 130 will be described with reference to FIG. 2. FIG. 2 is a perspective view that illustrates the housing 112 and the stator 130 of the rotating electrical machine 100 according to the first embodiment of the present invention.

### Housing

The housing 112 is formed in a cylindrical shape acquired by performing drawing for a steel sheet (high-tensile steel plate) having a thickness of about 2 to 5 mm. In the housing 112, a plurality of flanges 115 attached to the casing 10 is arranged. The plurality of flanges 115 are arranged on the peripheral edge of one end face of the cylinder-shaped housing 112 so as to protrude to the outer side in the diameter direction. The flanges 115 are formed by cutting out portions of the end portion, which is formed at the time of performing drawing, other than the flanges 115 and are formed to be integrated with the housing 112.

### Stator

The stator 130 includes a cylinder-shaped stator core 132 and a stator coil 138 installed to the stator core 132.

### Stator Core

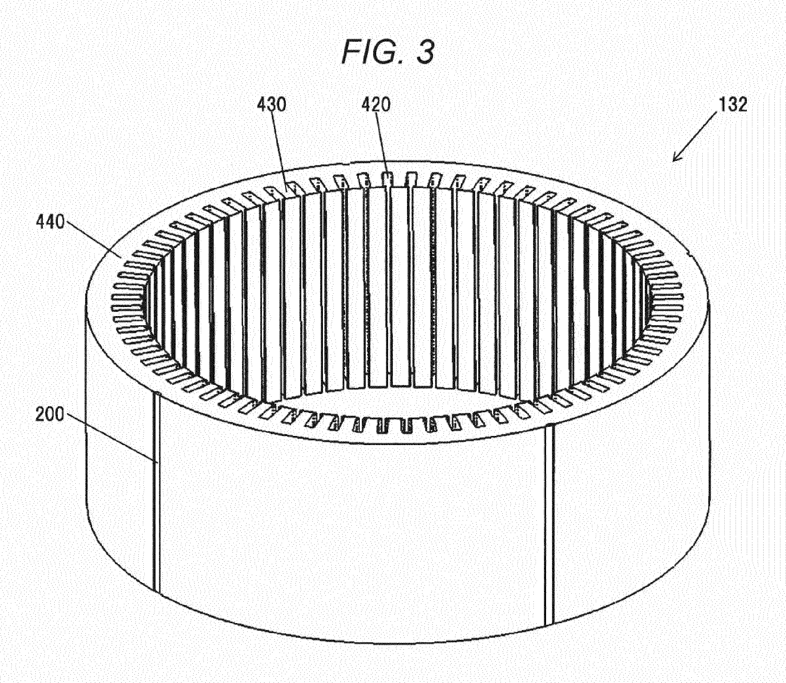

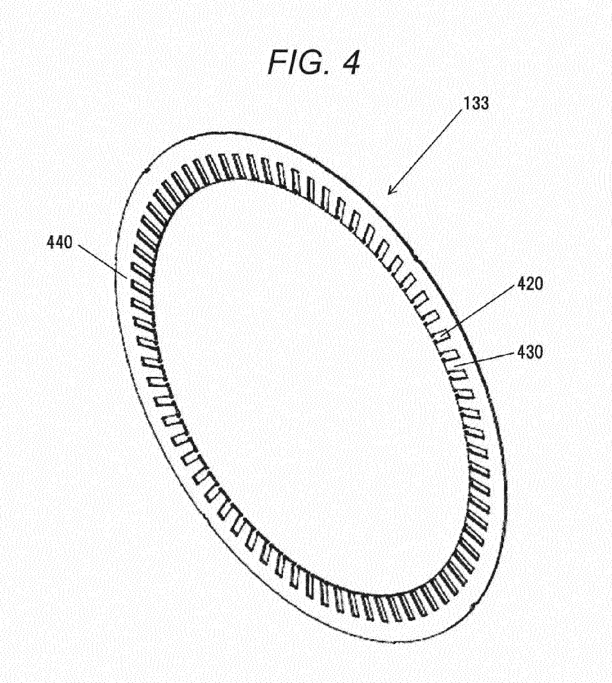

The stator core 132 will be described with reference to FIGS. 3 and 4. FIG. 3 is a perspective view that illustrates the stator core 132, and FIG. 4 is a perspective view that illustrates the magnetic steel sheet 133 configuring the stator core 132. In the stator core 132, as illustrated in FIG. 3, a plurality of slots 420 parallel in the axial direction of the stator core 132 is formed in the circumferential direction to be equally spaced.

For example, the number of the slots 420 is 72 in this embodiment, and the above-described stator coil 138 is housed in the slots 420. The inner circumferential side of each slot 420 is formed as an opening, and the width of the opening in the circumferential direction of the opening is almost equal to or slightly less than that of a coil installation portion of each slot 420 to which the stator coil 138 is installed.

Teeth 430 are formed between the slots 420, and each of the teeth 430 is formed integrally with a circle-shaped core back 440. In other words, the stator core 132 is formed as an integral type core in which each of the teeth 430 and the core back 440 are integrally formed.

The teeth 430 has a function for generating rotating torque in the rotor 150 by leading a rotating magnetic field generated by the stator coil 138 to the rotor 150.

The stator core 132 is formed by performing punching processing or etching processing for magnetic steel sheets 133 (see FIG. 4) having a thickness of about 0.05 to 1.0 mm and stacking a plurality of ring-shaped molded magnetic steel sheets 133.

The stator core 132 is fitted and fixed to the inner side of the above-described cylinder-shaped housing 112 through shrinkage fit. In a specific assembly method, for example, first, the stator core 132 is arranged, and the housing 112 of which the inner diameter has been broadened in accordance with thermal expansion by being heated previously is fitted to the stator core 132. Next, by contracting the inner diameter by cooling the housing 112, the outer circumferential portion of the stator core 132 is clamped due to the thermal contraction.

The dimension of the inner diameter of the housing 112 is set to be smaller than the dimension of the outer diameter of the stator core 132 by a predetermined value such that the stator core 132 does not slip from the housing 112 by the reaction of the torque of the rotor 150 at the operating time, and accordingly, the stator core 132 is strongly fixed to the inside of the housing 112 in accordance with the fitting of shrinkage fit.

A difference between the outer diameter of the stator core 132 and the inner diameter of the housing 112 at room temperature is called an interference, and, by setting the interference in consideration of maximum torque of the rotating electrical machine 100, the housing 112 holds the stator core 132 in accordance with a predetermined clamping force.

Note that the stator core 132 may be fitted and fixed to the housing 112 through press fit without being limited to the case of being fitted and fixed through shrinkage fit.

In the stator core 132 according to this embodiment, as illustrated in FIG. 3, a welding portion 200 is disposed as a reinforcing portion. The reinforcing portion connects the stacked magnetic steel sheets 133 and suppresses the deformation of the magnetic steel sheets 133 due to the clamping force of the housing 112. The reinforcing portion will be described later.

### Stator Coil

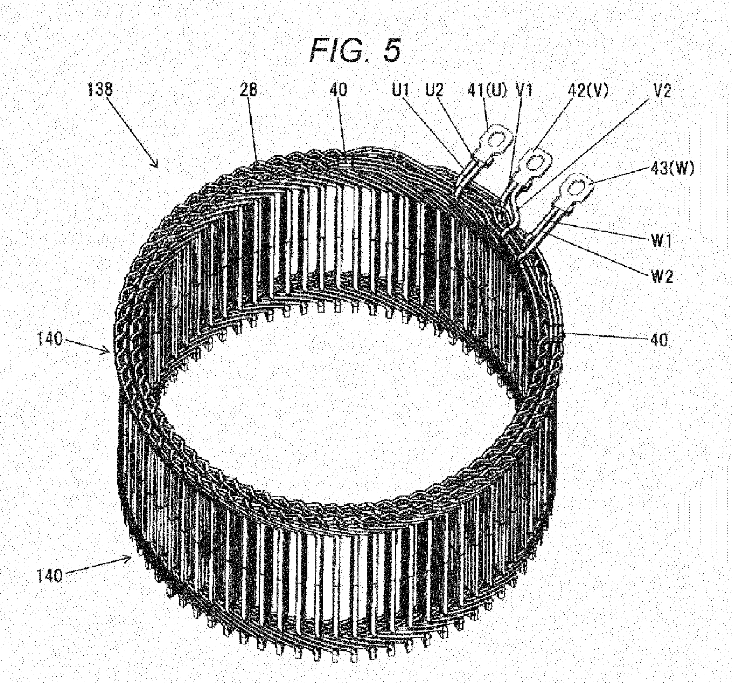

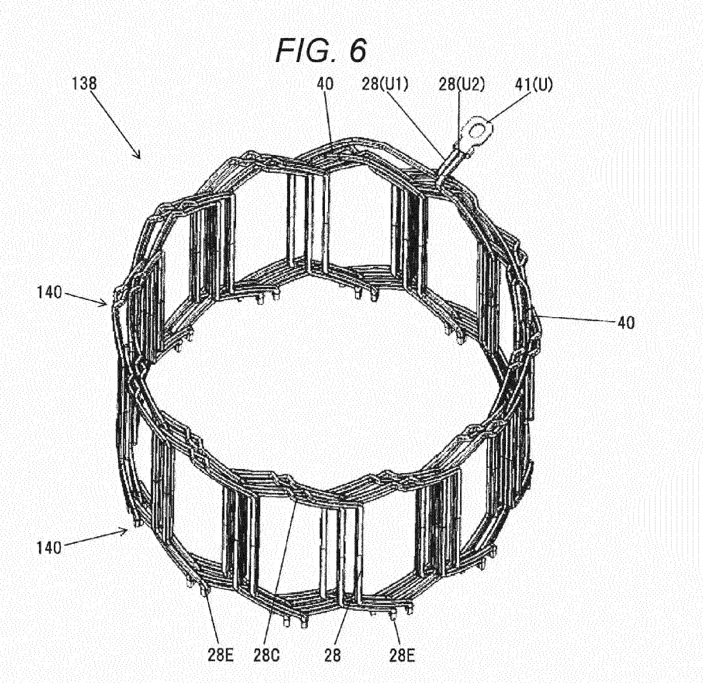

The stator coil 138 will be described with reference to FIGS. 2 and 5 to 8. FIG. 5 is a perspective view that illustrates the stator coil 138 corresponding to three phases. FIGS. 6, 7, and 8 are perspective views that illustrate a stator coil 138 of a U phase, a stator coil 138 of a U1 phase, and a stator coil 138 of U2 phase to be wound around the stator core 132.

The stator coils 138 are wound in a distributed winding system and are connected together using the configuration of a star connection. The distributed winding is a winding system in which phase windings are wound around the stator core 132 such that the phase windings are housed in two slots 420 separated across a plurality of slots 420. Since this embodiment employs the distributed winding as a winding system, the formed magnetic flux distribution is closer to a sinusoidal wave than a concentrated winding, and the embodiment has characteristics in which reluctance torque can be easily generated. Accordingly, since the controllability of control using weak field control or reluctance torque is improved, the rotating electrical machine 100 can be used for a broad rotation speed range from a low rotation speed to a high rotation speed, and superior motor characteristics that are appropriate to an electric vehicle can be acquired. Note that a fractional pitch winding may be employed so as to suppress high frequency components by shifting with an upper layer/lower layer coil by one slot.

The stator coil 138 configures the star-connected phase coils of three phases, and the cross-section may have a ring shape or a rectangle shape. A structure in which the internal cross-sections of the slots 420 are effectively used as much as possible, and the space formed inside the slots is small tends to lead to improvement of the efficiency, and accordingly, it is desirable from the viewpoint of the improvement of the efficiency that the cross-section of the stator coil 138 be rectangular. Note that the rectangular shape of the cross-section of the stator coil 138 may be a shape in which the stator core 132 is short in the circumferential direction and is long in the diameter direction or, contrary to this, a shape in which the stator coil is long in the circumferential direction and is short in the diameter direction.

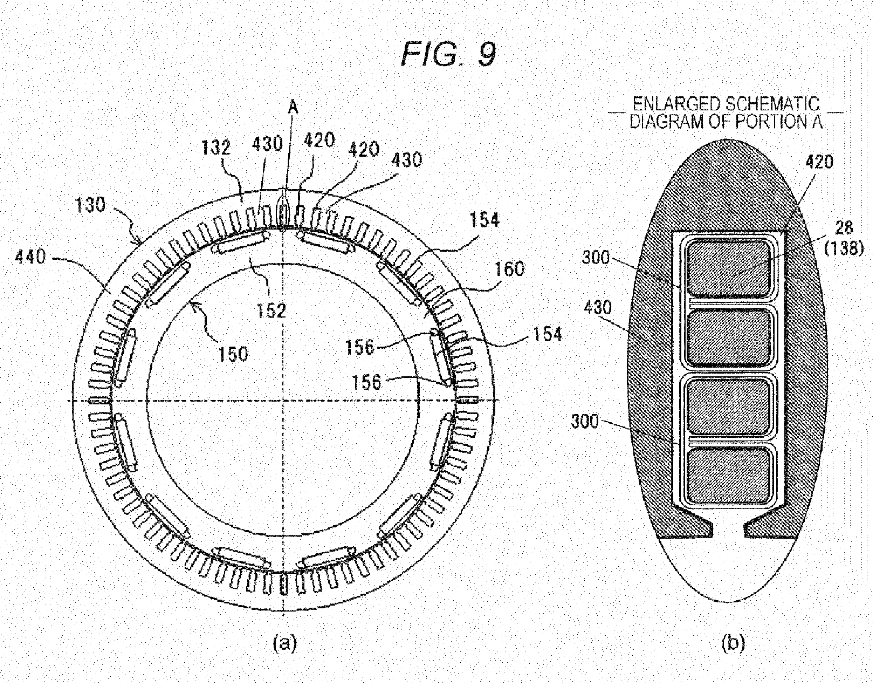

In this embodiment, as the stator coil 138, a rectangular wire having a shape is used in which the rectangular cross-section of the stator coil 138 is long in the circumferential direction of the stator core 132 and is short in the diameter direction of the stator core 138 inside each slot 420 (see FIG. 9(b)). The outer circumference of the rectangular wire is coated with an insulating film.

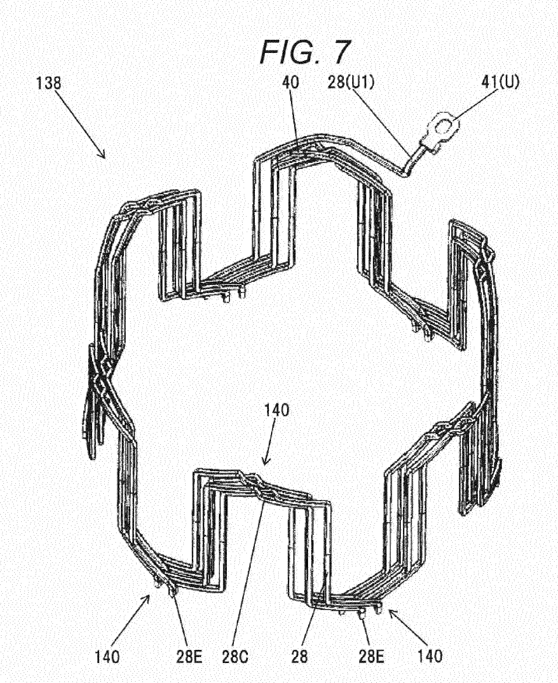

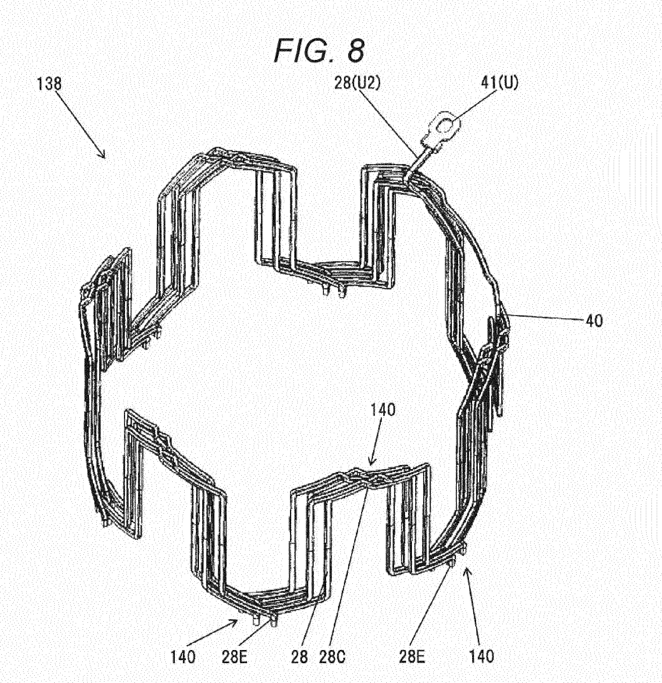

The stator coil 138, as illustrated in FIGS. 7 and 8, is a segment-type coil that is formed by connecting a plurality of segment conductors 28 having a "U" shape together. In the segment conductor 28, a center portion 28C is arranged in one coil end 140, and both end portions 28E and 28E are welded to the other coil end 140.

In the stator coil 138, as illustrated in FIG. 2, coils (see FIG. 5) of six series U1, U2, V1, V2, W1, and W2 as a whole are installed so as to adhere to the stator core 132. The coils of six series configuring the stator coil 138 are arranged to have an appropriate space therebetween in accordance with the slots 420.

As illustrated in FIG. 5, in one coil end 140 of the stator coil 138, AC terminals 41(U), 42(V), and 43(W) that are input/output coil conductors of the stator coils 138 of the three phases UVW and a conductor 40 for connecting neutral points 40 are drawn. In order to improve the operability of the assembly of the rotating electrical machine 100, the AC terminals 41(U), 42(V), and 43(W) for receiving three-phase AC power are arranged so as to protrude from the coil end 140 to the outer side in the axial direction of the stator core 132. The stator 130 is connected to a power converting device not illustrated in the figure through the AC terminals 41(U), 42(V), and 43(W), whereby AC power is supplied. The conductor 40 for connecting two neutral points arranged on both sides of the input/output coil conductor is configured by a Ul-phase neutral line that is the end of the Ul-phase winding, a V1-phase neutral line that is the end of the V1 phase winding, and a W1-phase neutral line that is the end of the W1 phase winding. This similarly applies to phase neutral lines U2, V2, and W2. The conductor 40 for connecting the neutral points has a structure in which three neutral lines are welded in advance, epoxy coating is performed for the neutral lines, and the neutral lines directly crawl about the upper face of the coil on the crown side.

As illustrated in FIGS. 2 and 5, in the coil end 140 that is a portion of the stator coil 138 protruding from the stator core 132 to the outer side in the axial direction, crossover wires are arranged so as to be orderly arranged as a whole, which leads to an advantage of decreasing the size of the whole rotating electrical machine. The orderly arrangement of the coil end 140 is also desirable from the viewpoint of the improvement of the reliability of the insulating property. A direct oil cooling system is employed in which cooling oil is directly applied to the coil end 140, and, when the coil ends 140 are orderly arranged, the coil surface is coated with the cooling oil, whereby the cooling capability is high.

For example, the terminals U, V, and W are connected through resistance brazing using a terminal component used for a rectangular wire. For the terminal component, punching processing is performed for a copper plate, and projections of φ 1 to 3 are molded to extrude at a plurality of positions from the rear side of the copper plate so as to have a height of 0.1 mm to 0.2 mm through punching. A projection system is employed in which a copper plate and a brazing material is interposed by electrodes and are caused to be conductive while being pressed.

Since a current flows to be concentrated on the projections, a structure is employed in which a contact portion between the copper plate and the brazing material locally generates heat, and the brazing material is melted to be bonded to the copper plate to be temporarily fixed. Since the brazing material is temporarily fixed by using the projections disposed at the plurality of positions, it is difficult to receive the influence of tensile stress at the time of bending forming, and crack and peel-off in the brazing material can be prevented. Note that a clad material to which a brazing material is attached in advance may be used. Alternatively, the terminals may be only thermally-caulked terminals. A temperature measurement sensor is brought into contact with an enclosure flat coil through a tube such as a heat-shrinkable tube.

While the stator coil 138 maintains an electric insulating property by employing a structure in which the outer circumference of the conductor is covered with an insulating film, in addition to the insulating film, by maintaining a withstand voltage using an insulating paper 300 (see FIG. 2), the reliability is further improved, which is preferable.

The insulating paper 300 is arranged in the slot 420 or the coil end 140. The insulating paper 300 (so-called a slot liner) arranged in the slot 420 is arranged between segment conductors 28 that pass through the slot 420 and the segment conductor 28 and the inner face of the slot 420 (see FIG. 9(b)), a withstand voltage between the segment conductors or the segment conductor 28 and the inner face of the slot 420 is improved.

For example, for a high voltage, the shape of the slot liner is a "B" shape for improving the insulating property also between the same phases other than different phases to the ground, and a structure is formed in which each coil is covered with the slot liner.

As illustrated in FIG. 2, for the purpose of inter-phase insulation and inter-conductor insulation in the coil end 140, the insulating paper 300 arranged in the coil end 140 is used by being arranged in a circular shape between the segment conductors. Like this, in the rotating electrical machine 100 according to this embodiment, the insulating paper 300 is arranged on the inner side of the slot 420 or in the coil end 140, and accordingly, a necessary withstand voltage can be maintained even when the insulating film is damaged or degraded. The insulating paper 300, for example, is an insulating paper of a heat-resistant polyamide paper and has a thickness of about 0.1 to 0.5 mm.

The rectangular wire has a relatively large coil gap, and a material having high fluidity such as insulating varnish flows downward without being attached to the surface of the coil, and accordingly, in order to actively attach the varnish to the surface of the coil, an insulator is used. By maintaining epoxy varnish and guiding the varnish along the surface to flow using the insulator, the varnish can be broadly penetrated. Since cooling oil flows along the insulator, a structure for effectively cooling the coil end 140 is formed.

### Rotor

Next, the rotor 150 will be described with reference to FIGS. 1 and 9. FIG. 9(a) is a schematic diagram that illustrates a cross section of the rotor 150 and the stator 130. In FIG. 9(a), for the convenience of description, the stator coil 138 and the insulating paper 300, which are housed inside the shaft 118 or the slot 420, are not illustrated. FIG. 9(b) is an enlarged schematic diagram of portion A illustrated in FIG. 9(a) and illustrates the stator coil 138 and the insulating paper 300 that are arranged inside the slot 420.

As illustrated in FIGS. 1 and 9(a), the rotor 150 includes a rotor core 152, and a permanent magnet 154 that is held in a magnet insertion hole formed in the rotor core 152. The rotor core 152 has a skew structure divided in the axial direction, and the magnet is divided in the axial direction. For example, the magnet is divided into two for each pole and has a "V"-shaped structure having 12 poles.

### Rotor Core

In the rotor core 152, magnetic insertion holes having a rectangular parallelepiped shape are formed to be equally spaced in the circumferential direction near the outer circumference, and, in each magnet insertion hole, a permanent magnet 154 is buried and is fixed using an adhesive or the like. The width of the magnet insertion hole in the circumferential direction is formed to be larger than the width of the permanent magnet 154 in the circumferential direction, and, on both sides of the permanent magnet 154, a magnetic gap 156 is formed. An adhesive may be buried in the magnetic gap 156, or the magnetic gap 156 may be hardened integrally with the permanent magnet 154 using a resin.

### Permanent Magnet

The permanent magnet 154 forms a field pole of the rotor 150. In this embodiment, although a configuration is employed in which one pole is formed by one permanent magnet 154, one pole may be configured by using a plurality of permanent magnets. By using the plurality of permanent magnets that are used for forming each pole, the magnetic flux density of each pole radiated by the permanent magnet increases, whereby magnet torques can increase.

The magnetization direction of the permanent magnet 154 is toward the diameter direction, and the magnetization direction is reversed for every field pole. In other words, when the stator-side face of the permanent magnet 154 used for forming a specific magnetic pole is magnetized to the N pole, and the shaft-side pole is magnetized to the S pole, the stator-side face of the permanent magnet 154 forming a magnetic pole adjacent thereto is magnetized to the S pole, and the shaft-side face is magnetized to the N pole. In this embodiment, 12 magnetic poles are formed by the rotor 150 by magnetizing and arranging 12 permanent magnets 154 so as to be equally spaced in the circumferential direction such that the magnetization direction is alternately changed for each magnetic pole.

The permanent magnet 154 may be buried in the magnet insertion hole of the rotor core 152 after being magnetized, or the permanent magnet 154 may be inserted into the magnet insertion hole of the rotor core 152 before being magnetized and thereafter, be magnetized by applying a strong magnetic field.

When the magnetic force of the permanent magnet 154 after the magnetization is strong, and the magnet is magnetized before the fixation of the permanent magnet 154 to the rotor 150, a strong attractive force is generated between the permanent magnet 154 and the rotor core 152 at the time of fixing the permanent magnet 154, and this attractive force disturbs the operation. In addition, garbage such as iron powers may be attached to the permanent magnet 154 in accordance with the strong attractive force. Accordingly, in order to improve the productivity of the rotating electrical machine 100, it is preferable that the permanent magnet 154 be magnetized after being inserted into the magnet insertion hole of the rotor core 152. As the permanent magnet 154, a neodymium-based or samarium-based sintered magnet, a ferrite magnet, a neodymium-based bonded magnet, or the like can be used. The current magnetic flux density of the permanent magnet 154 is desirably in the range of about 0.4 to 1.3 T, and the neodymium-based magnet is more preferable.

In this embodiment, between the permanent magnets 154 forming the magnetic poles, auxiliary magnetic poles 160 are formed. The auxiliary magnetic pole 160 acts so as to decrease the magnetic resistance of a q-axis magnetic flux generated by the stator coil 138. Since the magnetic resistance of the q-axis magnetic flux is formed to be much smaller than that of a d-axis magnetic flux by the auxiliary magnetic pole 160, whereby large reluctance torque is generated.

When a rotating magnetic field is generated in the stator 130 by supplying a three-phase AC current to the stator coil 138, the rotating magnetic field is applied to the permanent magnet 154 of the rotor 150, whereby magnet torque is generated. Since the above-described reluctance torque is generated in the rotor 150 in addition to the magnet torque, both of the magnet torque and the reluctance torque described above act as rotating torque in the rotor 150, whereby large rotating torque can be acquired.

### Reinforcing Portion

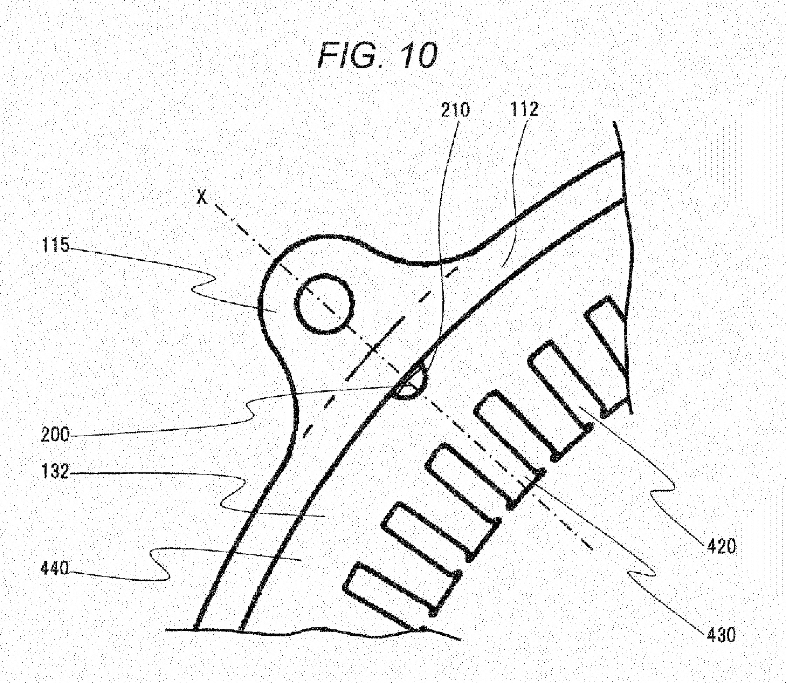

The reinforcing portion will be described with reference to FIGS. 2, 3, and 10. FIG. 10 is a schematic plan view that illustrates a state in which the stator core 132 is fixed to the housing 112 through shrinkage fit or press fit in the rotating electrical machine 100 according to the first embodiment of the present invention. In FIG. 10, the stator coil 138 and the insulating paper 300, which are arranged inside the slot 420, are not illustrated.

As described above, the stator core 132 is fitted and fixed to the housing 112 through shrinkage fit or press fit. In the stator core 132 after the shrinkage fit or the press fit, compressive stress is generated in accordance with the clamping force of the housing 112. This compressive force is particularly concentrated on a portion of the housing 112 that is brought into contact with the flange 115. As a result, the magnetic steel sheet 133 configuring the stator core 132 is deformed to be in an undulated shape in the axial direction.

When the magnetic steel sheet 133 is deformed to protrude in the axial direction, the insulating film of the insulating paper 300 or the stator coil 138 that is arranged in the slot 420 is damaged, and there is concern that coil conductors or a coil conductor and the stator core 132 form a short circuit so as to lower the insulating property. In addition, in accordance with the deformation of the face of the stator core, a creeping distance between the stator core 132 and the coil conductor in the coil end 140 decreases, and there is a concern that the coil conductor and the stator core 132 form a short circuit. The tendency of decreasing the insulating property becomes remarkable as the space factor of the electrical conductor is improved in accordance with a decrease in the size and an increase in the output of the rotating electrical machine 100. The tendency of decreasing the insulating property becomes remarkable in accordance with an increase in the density of the coil end 140. The tendency of decreasing the insulating property becomes remarkable as a maximum clamping torque of the housing 112 increases.

Thus, in this embodiment, in order to secure a sufficient insulating property by suppressing the deformation of the magnetic steel sheet 133, at a position in the stator core 132, which corresponds to the flanges 115 of the housing 112, in other words, at a portion on which the stress is concentrated, the welding portion 200 is arranged as a reinforcing portion.

The welding portion 200 is arranged to be parallel to the axial direction of the stator core 132 in the outer circumferential portion of the cylinder-shaped stator core 132 through TIG welding, laser welding, or the like. The welding portion 200, as illustrated in FIG. 10, is formed in a semi-circle shaped welding groove 210, which is arranged in the outer circumferential portion of the stator core 132 in advance, and the welding portion 200 does not protrude to the outer side in the diameter direction of the stator core 132.

The welding groove 210 is arranged on the center axis X of the teeth 430 so as not to block the flow of the magnetic flux in a portion in which the magnetic flux density is high. In other words, the welding groove 210 is arranged on the center axis X of portions configuring the teeth 430 of each magnetic steel sheet 133. In addition, by allowing the core back 440 to have a sufficient width, the welding grooves 210 may be formed, other than on the center axis X of the teeth 430.

According to the first embodiment described above, the following operation and effects can be acquired.
(1) By forming the welding portions 200 as reinforcing portions, the rigidity of portions on which the stress is concentrated is improved, and accordingly, the deformation of the magnetic steel sheet 133 (in other words, the deformation of the core back 440 or the teeth 430) can be suppressed.
(2) According to (1), the insulating film of the insulating paper 300 or the coil conductor due to the deformation of the core back 440 or the teeth 430 can be prevented from being damaged.
(3) According to (1), a decrease in the creeping distance between the coil conductor and the face of the stator core due to the deformation of the core back 440 or the teeth 430 can be prevented.
(4) According to (1) to (3), the rotating electrical machine 100 including the stator 130 having a superior insulating property can be provided.

### [Second Embodiment]

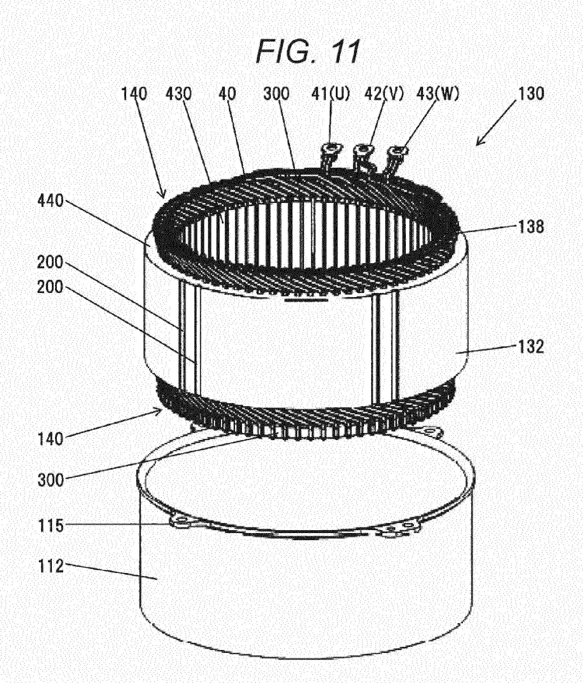

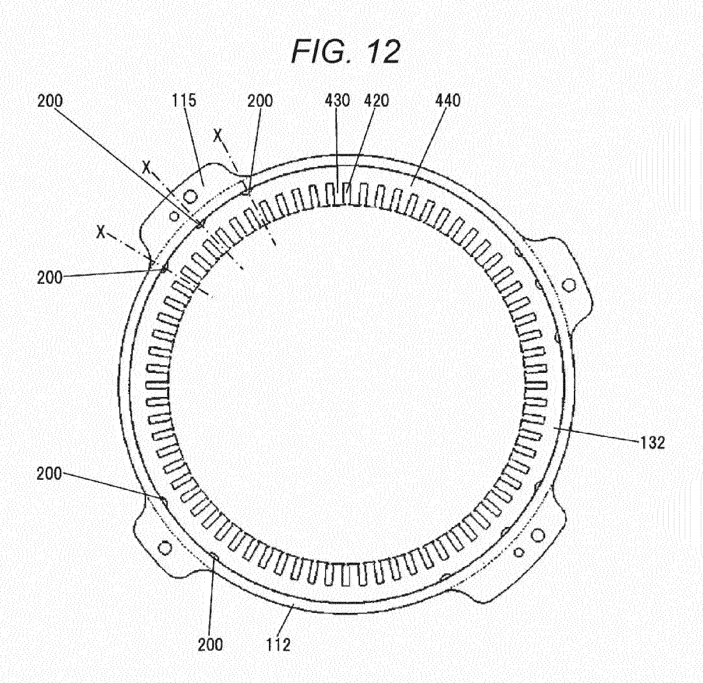

A rotating electrical machine 100 according to a second embodiment of the present invention will be described with reference to FIGS. 11 and 12. FIG. 11 is a perspective view that illustrates a stator 130 and a housing 112 of the rotating electrical machine 100 according to the second embodiment of the present invention, and FIG. 12 is a schematic plan view that illustrates a state in which a stator core 132 is fixed to the housing 112 through shrinkage fit or press fit in the rotating electrical machine 100 according to the second embodiment of the present invention. In the figures, the same reference numeral is assigned to a portion that is the same as or corresponds to that of the first embodiment, and description thereof will not be presented. In FIG. 12, a stator coil 138 and an insulating paper 300, which are arranged inside a slot 420, are not illustrated.

In the second embodiment, at a position in the outer circumferential portion of the stator core 132 that corresponds to the flange 115, a plurality of welding portions 200 as reinforcing portions is arranged. According to the second embodiment, effects that are the same as (1) to (4) described in the first embodiment can be acquired. According to the second embodiment, by arranging the plurality of welding portions 200, the rigidity can be further improved, whereby a case where the interference of the shrinkage fit or the press fit is high can be responded as well.

The welding portions 200, as illustrated in FIG. 12, may be arranged at a total of three positions located near the center of the flange 115 and near both end portions of the flange 115 so as to correspond to the flange 115 or may be arranged at a total of two positions located near both end portions of the flange 115. The welding portion 200 can be appropriately arranged at a position located near a portion of the outer circumferential portion of the stator core 132 with which the flange 115 is brought into contact.

### [Third Embodiment]

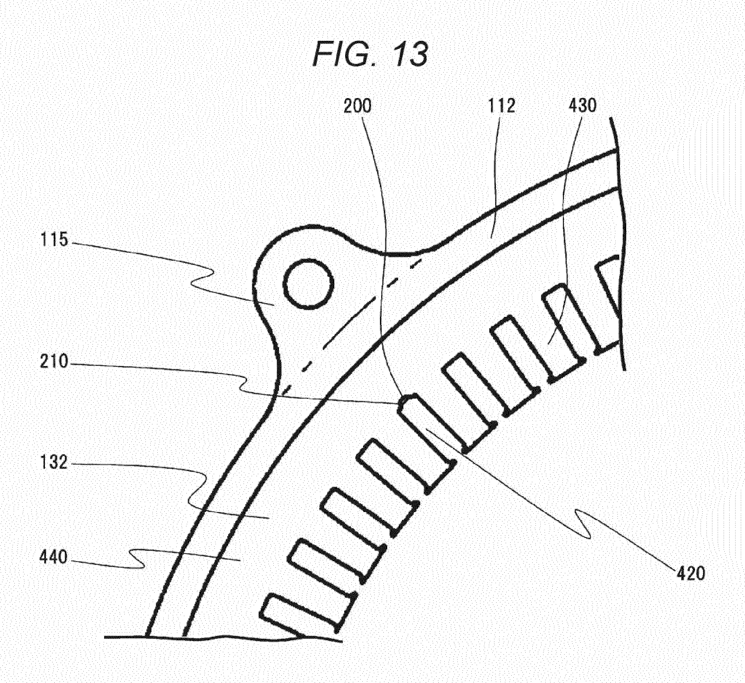

A rotating electrical machine 100 according to a third embodiment of the present invention will be described with reference to FIG. 13. FIG. 13 is a schematic plan view that illustrates a state in which a stator core 132 is fixed to a housing 112 through shrinkage fit or press fit in the rotating electrical machine 100 according to the third embodiment of the present invention. In the figure, the same reference numeral is assigned to a portion that is the same as or corresponds to that of the first embodiment, and description thereof will not be presented. In the figure, a stator coil 138 and an insulating paper 300 are not illustrated.

In the third embodiment, on a bottom face of a slot 420 located at a position corresponding to a flange 115, a welding portion 200 is arranged. In other words, the welding portion 200 as a reinforcing portion is arranged at a position located in the inner circumferential portion of the stator core 132 that corresponds to the flange 115. According to the third embodiment, by arranging the welding portion 200 in the inner circumferential portion of the stator core 132, effects that are the same as (1) to (4) described in the first embodiment can be acquired. Even when the welding portion 200 is arranged in the inner circumferential portion, similarly to the second embodiment, by arranging a plurality of welding portions 200 (not illustrated in the figure), the rigidity can be further improved, whereby a case where the interference of the shrinkage fit or the press fit is high can be responded as well.

### [Fourth Embodiment]

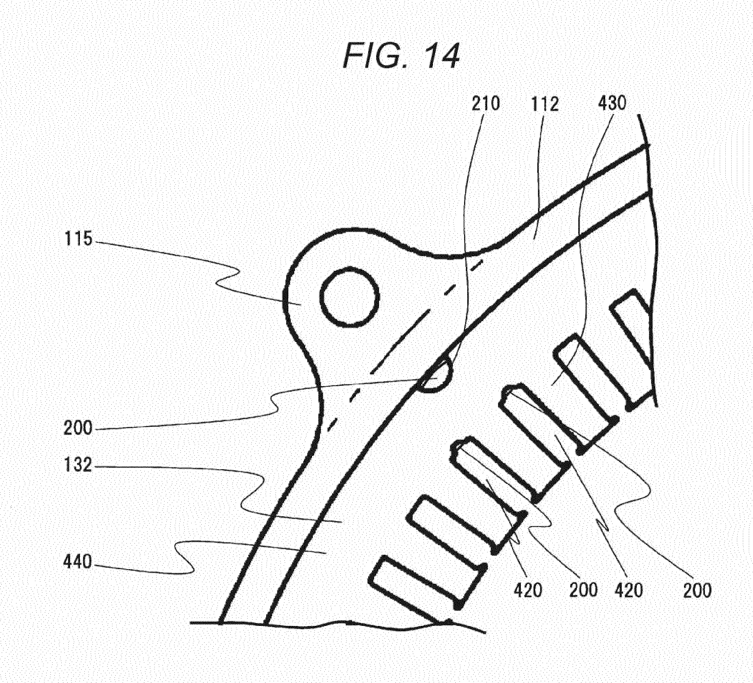

A rotating electrical machine 100 according to a fourth embodiment of the present invention will be described with reference to FIG. 14. FIG. 14 is a schematic plan view that illustrates a state in which a stator core 132 is fixed to a housing 112 through shrinkage fit or press fit in the rotating electrical machine 100 according to the fourth embodiment of the present invention. In the figure, the same reference numeral is assigned to a portion that is the same as or corresponds to that of the first embodiment, and description thereof will not be presented. In the figure, a stator coil 138 and an insulating paper 300 are not illustrated.

In the fourth embodiment, welding portions 200 are arranged in the outer circumferential portion of the stator core 132 and on a bottom face of a slot 420. In other words, the welding portions 200 as reinforcing portions are arranged at positions that correspond to the flange 115 in the outer circumferential portion and the inner circumferential portion of the stator core 132. According to the fourth embodiment, by arranging the welding portions 200 in both the outer circumferential portion and the inner circumferential portion instead of in one thereof, the rigidity of the stator core 132 is further improved, and effects that are the same as those described in the first to third embodiments described above can be acquired.

### [Fifth Embodiment]

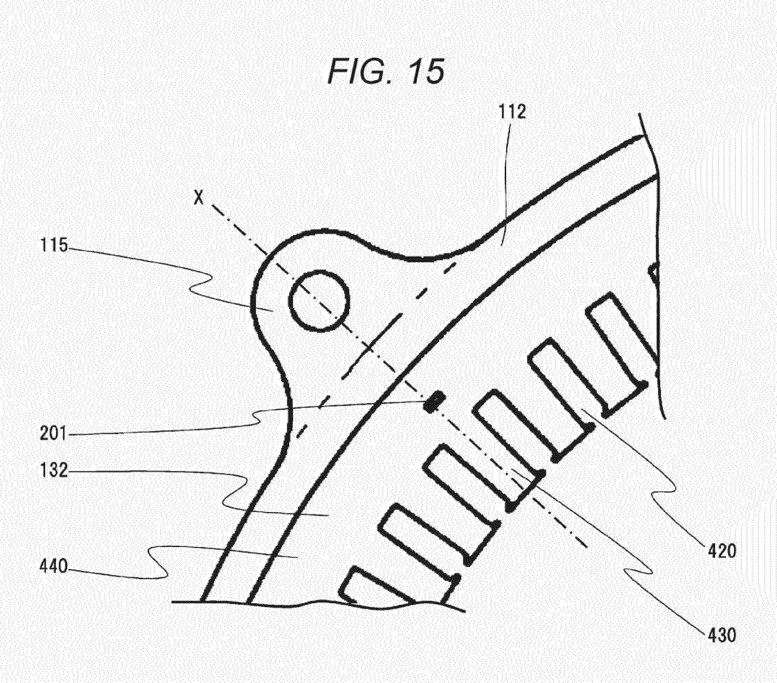

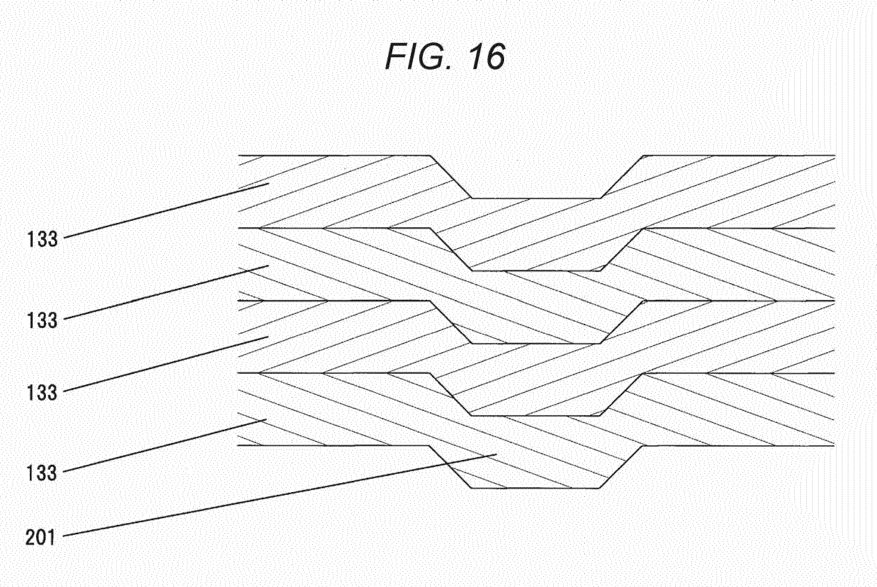

A rotating electrical machine 100 according to a fifth embodiment of the present invention will be described with reference to FIGS. 15 and 16. FIG. 15 is a schematic plan view that illustrates a state in which a stator core 132 is fixed to a housing 112 through shrinkage fit or press fit in the rotating electrical machine 100 according to the fifth embodiment of the present invention. FIG. 16 is a schematic diagram that illustrates a cross-section of a clinching part 201. In the figure, the same reference numeral is assigned to a portion that is the same as or corresponds to that of the first embodiment, and description thereof will not be presented. In FIG. 15, a stator coil 138 and an insulating paper 300 are not illustrated.

In the fifth embodiment, the clinching part 201 for stacking and fixing the magnetic steel sheets 133 configuring the stator core 132 is formed as a reinforcing portion that improves the rigidity of the portion corresponding to the flange 115. Since the clinching part 201 is arranged on the center axis X of the teeth 430, a sufficient flow of the magnetic flux can be secured.

The clinching part 201 includes a convex portion and a concave portion having a trapezoidal shape formed in the stacking direction of the magnetic steel sheets 133 through punching or the like. Note that the clinching part 201 is not limited to the case where "V" clinching is employed but may employ circular clinching.

According to the fifth embodiment, by including the function as a reinforcing portion in the clinching part 201, in a case where the interference is relatively small, effects that are the same as (1) to (4) described in the first embodiment can be acquired.

### [Sixth Embodiment]

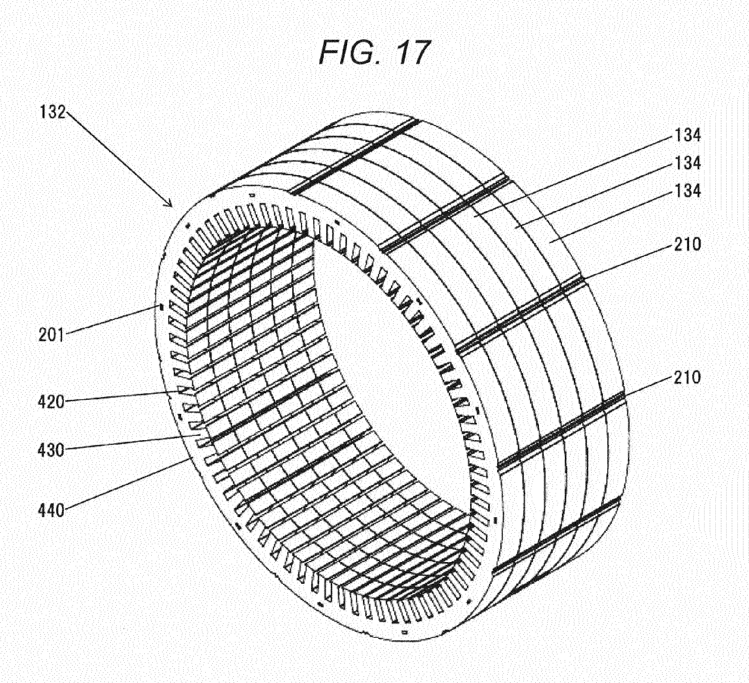

A rotating electrical machine 100 according to a sixth embodiment of the present invention will be described with reference to FIG. 17. FIG. 17 is a perspective view that illustrates a stator core 132 of the rotating electrical machine 100 according to the sixth embodiment of the present invention.

By manufacturing the stator core 132 using so-called rotation lamination, the shape precision can be improved. Here, the rotation lamination is a method of manufacturing the stator core 132 in which deviations in the plate thickness are averaged by sequentially arranging a plurality of lamination bodies 134 each formed from a predetermined number of magnetic steel sheets 133 in the circumferential direction by shifting the lamination bodies by every predetermined angle. In the sixth embodiment, the stator core 132 is formed by rotating six lamination bodies 134 by every 60 degrees.

In a case where the stator core 132 is formed by the rotation lamination, it is necessary to form welding grooves 210 at a predetermined gap in advance and to arrange the welding grooves 210 of the lamination bodies 134, which are arranged by being shifted by predetermined angles to coincide with each other. In this embodiment, the welding grooves 210 are arranged for every 30 degrees.

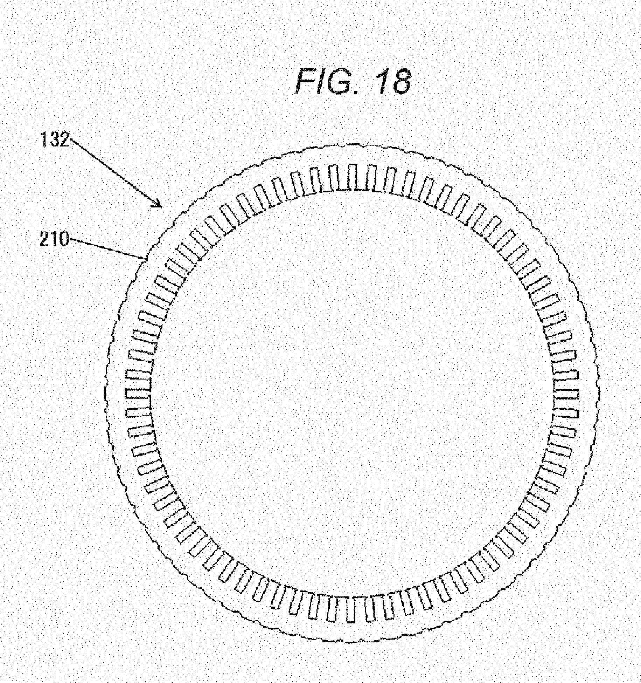

As described above, while the positions at which the welding grooves 210 are formed may be determined in advance in consideration of the rotation lamination, the position and the shape of the flange 115 differ in accordance with the shape of an engine casing or a transmission casing to which the rotating electrical machine 100 is installed, and accordingly, as illustrated in FIG. 18, it is preferable that the welding grooves 210 be arranged in the outer circumferential portion on the center axis of all the teeth 430 of the stator core 132 in advance. By doing so, when the flange 115 is located at any position, the welding groove 210 of each lamination body 134 can coincide with a position corresponding to the flange 115 at the time of performing the rotation lamination, which is preferable. Since the welding grooves 210 are formed on the center axis of the teeth 430, the flow of a magnetic flux in a portion in which the magnetic flux density is high is not disturbed.

Note that, in a case where the welding grooves 210 are arranged in the outer circumferential portion on the center axis of all the teeth 430 of the stator core 132 in advance, the welding portions 200 are not formed in all the welding grooves 210, but the welding portions 200 are arranged in welding grooves 210 arranged in correspondence with the flanges 115 of the housing 112 when the stator core 132 is fitted and fixed to the housing 112 through shrinkage fit or press fit. According to the sixth embodiment, effects that are the same as (1) to (4) described in the first embodiment can be acquired.

The following modifications belong to the scope of the present invention, and one or a plurality of modified examples may be combined with the above-described embodiment.
(1) The invention is not limited to a case where one of the welding portion 200 or the clinching part 201 is employed as a reinforcing portion, but the welding portion 200 and the clinching part 201 may be combined as a reinforcing portion. For example, in a portion at which a small flange 115 is located, the clinching part 201 may be formed as a reinforcing portion, and, in a portion at which a large flange 115 is located, the welding portion 200 may be formed as a reinforcing portion. In addition, in the portion at which the large flange 115 is located, both the welding portion 200 and the clinching part 201 may be formed.
(2) The invention is not limited to a case where the welding portion 200 or the clinching part 201 used for stacking and fixing the stator core 132 is configured to have the function as a reinforcing portion, but a reinforce portion may be arranged separately from the welding portion 200 or the clinching part 201 used for connecting the magnetic steel sheet 133. For example, it may be configured such that the magnetic steel sheets 133 are stacked and fixed by the clinching part 201, and the welding portion 200 is arranged not for connecting the magnetic steel sheets 133 but for only achieving the function as a reinforcing portion. In other words, the reinforcing portion may be arranged only at a position located near the flange 115 disposed in one end portion of the housing 112. In other words, the reinforcing portion may be arranged only at a position located on the periphery of one end portion side of the stator core 132.
(3) The reinforcing portion is a portion that improves the rigidity of the stator core 132, and thus, instead of the welding portion 200 or the clinching part 201, a member such as a bar may be arranged so as to be inserted into a groove formed in the outer circumferential portion of the stator core 132 and to be parallel to the axial direction of the stator core 132 and fixed through welding or the like as a reinforcing portion.
(4) While the above-described stator core 132 has been described for an integral type core in which a plurality of teeth 430 is integrated with the core back 440, the stator core 132 to which the present invention can be applied is not limited thereto. For example, the invention can be applied also to a case where a stator core 132 formed by a plurality of divided cores is fitted and fixed to the housing 112 through shrinkage fit or press fit.
(5) The invention is not limited to the case of being applied to the stator core 132 to which a segment-type coil is installed but may be applied also to case where the stator coil 138 is wound around the teeth 430. By doing so, the stress participating to the stator coil 138 due to the deformation of the stator core 132 is suppressed, and damage in the insulating film of the coil conductor can be prevented.

While various embodiments and modified examples have been described as above, the present invention is not limited to the contents thereof. Other embodiments considered within the scope of the present invention as claimed also belong to the scope of the present invention.

## Claims

1. A rotating electrical machine comprising:
a cylinder-shaped housing (112) that includes a plurality of flanges (115) installed to a casing (10);
a stator (130) that includes a cylinder-shaped stator core (132) fixed to the housing (112) through shrinkage fit or press fit; and
a rotor (150) that is arranged inside the stator (130) so as to be rotatable,
wherein, in the stator core (132), a plurality of steel sheets (133) is stacked, and
reinforcing portions used for suppressing deformation of the steel sheets (133) are arranged at positions in the stator core (132) that correspond to the flanges (115) of the housing (112), and
wherein the stator core (132) is an integration-type core,
a plurality of slots (420) parallel to the axial direction of the stator core (132) is formed in the stator core (132),
the rotating electrical machine **characterized in** further comprising
a segment-type coil in which a plurality of segment conductors is connected to each other and an insulating paper (300) used for insulating between the segment conductors and the slots (420) and the segment conductors are arranged in the slot (420);
wherein the reinforcing portions are formed as welding portions arranged to be parallel to an axial direction of the stator core (132) or the reinforcing portions are formed as clinching parts used for stacking and fixing the steel sheets (133), and
wherein the stator (130) fixed to the housing (112) is held to be fixed inside the casing by fastening the plurality of flanges (115) disposed in the housing (112) to the casing (10).

2. The rotating electrical machine according to claim 1, wherein the welding portions are arranged in an outer circumferential portion and/or an inner circumferential portion of the stator core (132).

3. The rotating electrical machine according to claim 1, wherein the reinforcing portions are arranged on a center axis of teeth (430) of the stator core (132).

4. The rotating electrical machine according to claim 1 or 2,
wherein welding grooves are arranged in the outer circumferential portion on the center axis of all the teeth (430) of the stator core (132), and
the welding portions are disposed in the welding grooves arranged in correspondence with the flanges (115) of the housing (112).

5. The rotating electrical machine according to any one of claims 1 to 4, wherein the plurality of flanges (115) protrudes to an outer side in a diameter direction on a peripheral edge of one end face of the cylinder-shaped housing (112).

## Patentansprüche

1. Rotierende Elektromaschine, die Folgendes umfasst:
eine zylinderförmige Umschließung (112), die mehrere Flansche (115) enthält, die an einem Gehäuse (10) installiert sind;
einen Stator (130), der einen zylinderförmigen Statorkern (132) enthält, der durch Schrumpfpassung oder Aufpressen an der zylinderförmigen Umschließung (112) befestigt ist; und
einen Rotor (150), der im Stator (130) derart angeordnet ist, dass er drehbar ist, wobei
im Statorkern (132) mehrere Stahlbleche (133) geschichtet sind, Verstärkungsabschnitte, die zum Unterbinden einer Verformung der Stahlbleche (133) verwendet werden, bei Positionen im Statorkern (132) angeordnet sind, die den Flanschen (115) der Umschließung (112) entsprechen,
der Statorkern (132) ein Kern des Integrationstyps ist,
mehrere Schlitze (420) parallel zur Axialrichtung des Statorkerns (132) im Statorkern (132) gebildet sind und
die rotierende Elektromaschine ferner **gekennzeichnet ist durch**
eine Spule des Segmenttyps, in der mehrere Segmentleiter miteinander verbunden sind, und ein Isolationspapier (300), das zum Isolieren zwischen den Segmentleitern und den Schlitzen (420) verwendet wird, und die Segmentleiter im Schlitz (420) angeordnet sind; wobei
die Verstärkungsabschnitte als Schweißabschnitte gebildet sind, die derart angeordnet sind, dass sie parallel zu einer Axialrichtung des Statorkerns (132) sind, oder die Verstärkungsabschnitte als Clinchteile gebildet sind, die zum Schichten und Befestigen der Stahlbleche (133) verwendet werden, und
der Stator (130), der an der Umschließung (112) befestigt ist, durch Anbringen der mehreren Flansche (115), die in der Umschließung (112) angeordnet sind, am Gehäuse (10) derart gehalten wird, dass er im Gehäuse befestigt ist.

2. Rotierende Elektromaschine nach Anspruch 1, wobei die Schweißabschnitte in einem Außenumfangsabschnitt und/oder einem Innenumfangsabschnitt des Statorkerns (132) angeordnet sind.

3. Rotierende Elektromaschine nach Anspruch 1, wobei die Verstärkungsabschnitte auf einer Mittelachse von Zähnen (430) des Statorkerns (132) angeordnet sind.

4. Rotierende Elektromaschine nach Anspruch 1 oder 2, wobei
Schweißfugen im Außenumfangsabschnitt auf der Mittelachse aller Zähne (430) des Statorkerns (132) angeordnet sind und
die Schweißabschnitte in den Schweißfugen, die in Übereinstimmung mit den Flanschen (115) der Umschließung (112) angeordnet sind, aufgebracht sind.

5. Rotierende Elektromaschine nach einem der Ansprüche 1 bis 4, wobei die mehreren Flansche (115) in einer Durchmesserrichtung an einer Umfangskante einer Stirnseite der zylinderförmigen Umschließung (112) zu einer Außenseite vorstehen.

## Revendications

1. Machine électrique rotative comprenant :
un boîtier en forme de cylindre (112) qui inclut une pluralité de brides (115) installées sur un carter (10) ;
un stator (130) qui inclut un noyau de stator en forme de cylindre (132) fixé au boîtier (112) via un assemblage par rétreint ou assemblage à la presse ; et
un rotor (150) qui est agencé à l'intérieur du stator (130) de manière à pouvoir être mis en rotation,
dans laquelle, dans le noyau de stator (132), une pluralité de tôles en acier (133) sont empilées, et
des portions de renforcement utilisées pour supprimer une déformation des tôles en acier (133) sont agencées à des positions dans le noyau de stator (132) qui correspondent aux brides (115) du boîtier (112), et
dans laquelle le noyau de stator (132) est un noyau de type à intégration,
une pluralité de fentes (402) parallèles à la direction axiale du noyau de stator (132) sont formées dans le noyau de stator (132),
la machine électrique rotative étant **caractérisée en ce qu'**elle comprend en outre
une bobine de type à segments dans laquelle une pluralité de conducteurs en segments sont connectés les uns aux autres et un papier isolant (300) utilisé pour servir d'isolant entre les conducteurs en segments et les fentes (420), et les conducteurs en segments sont agencés dans la fente (420) ;
dans laquelle les portions de renforcement sont formées à titre de portions de soudage agencées pour être parallèles à une direction axiale du noyau de stator (132) ou les portions de renforcement sont formées à titre de parties de sertissage utilisées pour empiler et fixer les tôles en acier (133), et
dans laquelle le stator (130) fixé au boîtier (112) est maintenu pour être fixé à l'intérieur du carter en attachant la pluralité de brides (115) disposées dans le boîtier (112) au carter (10).

2. Machine électrique rotative selon la revendication 1,
dans laquelle les portions de soudage sont agencées dans une portion circonférentielle extérieure et/ou une portion circonférentielle intérieure du noyau de stator (132).

3. Machine électrique rotative selon la revendication 1,
dans laquelle les portions de renforcement sont agencées sur un axe central de dents (430) du noyau de stator (132).

4. Machine électrique rotative selon la revendication 1 ou 2,
dans laquelle des rainures de soudage sont agencées dans la portion circonférentielle extérieure sur l'axe central de toutes les dents (430) du noyau de stator (132), et
les portions de soudage sont disposées dans les rainures de soudage agencées en correspondance avec les brides (115) du boîtier (112).

5. Machine électrique rotative selon l'une quelconque des revendications 1 à 4,
dans laquelle la pluralité de brides (115) se projettent vers un côté extérieur dans une direction diamétrale sur un bord périphérique d'une face terminale du boîtier en forme de cylindre (112).
